# EUROPÄISCHE PATENTANMELDUNG

(11) **EP 1 271 864 A1**
(43) Veröffentlichungstag der Anmeldung: **02.01.2003**
(21) Anmeldenummer: 01115520.7
(22) Anmeldetag: 27.06.2001
(51) Int. Cl.: H04L 12/64, H04L 29/12

(54) **Funkkommunikationssystem und Verfahren zu dessen Betrieb**

(71) Anmelder: SIEMENS AKTIENGESELLSCHAFT, 80333 München (DE)
(72) Erfinder: Metzler, Jochen, 89231 Neu-Ulm (DE); Reim, Thomas, 88481 Balzheim (DE)

(57) **Zusammenfassung**

Zum Aufbau einer Verbindung zwischen einem ersten Netzwerkelement (Z1), das verbindungsorientierte Verbindungen unterstützt, und einem zweiten Netzwerkelement (Z2), das paketorientierte Verbindungen unterstützt, wird eine verbindungsorientierte Verbindung zwischen dem ersten Netzwerkelement (Z1) und einer Netzübergangseinheit (IWU1) und eine paketorientierte Verbindung zwischen dem zweiten Netzwerkelement (Z2) und der Netzübergangseinheit (IWU1) aufgebaut. Dabei wird ein erstes Verbindungsprotokoll, das dem ersten Netzwerkelement (Z1) zugeordnet ist, und ein zweites Verbindungsprotokoll, das dem zweiten Netzwerkelement (Z2) zugeordnet ist, verwendet. Das erste Verbindungsprotokoll und das zweite Verbindungsprotokoll unterscheiden sich dabei durch ein Informationselement, das eine Adresse für die paketorientierte Verbindung zwischen dem zweiten Netzwerkelement (Z2) und der Netzübergangseinheit (IWU1) enthält.

## Beschreibung

Funkkommunikationssysteme dienen der Übertragung von Informationen, Sprache oder Daten, mit Hilfe von elektromagnetischen Wellen über eine Funkschnittstelle, auch Luftschnittstelle genannt, zwischen einer sendenden und einer empfangenden Funkstation. Funkkommunikationssysteme können aufgeteilt werden in ein Stammnetzwerk (Core Net), in dem Nutz- und Signalisierungsdaten einer Vielzahl von Endgeräten über weite Strecken leitungsgebunden befördert werden, und über das eine Verbindung zu einem Festkommunikationsnetz realisiert werden kann, und in ein Funkzugangsnetz, auch RAN (Radio Access Network) bezeichnet, über das von den Endgeräten empfangene Daten in ein für die Übertragung im Stammnetzwerk geeignetes Format umgesetzt und umgekehrt, das Format von vom Stammnetzwerk empfangenen Daten an die Funkübertragung angepasst und an die jeweilige Funkstation weitergeleitet werden, innerhalb von deren Sendebereich sich das betreffende Endgerät aufhält.

Funkkommunikationssysteme der ersten und zweiten Generation sind derzeit weltweit im Einsatz und stoßen wegen der großen Nachfrage nach mobiler Kommunikation an ihre Kapazitätsgrenzen. Die sich abzeichnenden Kapazitätsprobleme sollen durch die Funkkommunikationssysteme der dritten Generation gelöst werden. Eines der erfolgversprechendsten Funkkommunikationssysteme der dritten Generation ist das Universal Mobile Telecommunication System (UMTS), das von dem Standardisierungsgremium 3GPP (Third Generation Partnership Procect) spezifiziert wurde (siehe zum Beispiel B. Walke, Mobilfunknetze und ihre Protokolle, Band 1, S. 385 - 387, Teubner Verlag 2000).

Die Datenübertragung in dem für UMTS spezifizierten Zugangsnetz mit der Bezeichnung UTRAN erfolgt verbindungsorientiert nach dem sogenannten ATM-Verfahren. Dabei werden die Daten, die über eine Verbindung übertragen werden sollen, in ATM-Zellen aufgeteilt. Die ATM-Zellen für mehrere Verbindungen werden zeitlich ineinander verschachtelt und über dieselbe physikalische Verbindung übertragen. Der Verbindungskanal bleibt dabei für die Dauer der Datenübertragung derselbe. Eine Übersicht über das ATM-Verfahren ist zum Beispiel B. Walke, Mobilfunknetze und ihre Protokolle, Band 2, Kapitel 8, Seite 255 bis 290, Teubner-Verlag 1998, zu entnehmen.

Parallel zu den Erfordernissen an die Mobilkommunikation steigt die Nachfrage nach weltweiter Datenkommunikation mit hoher Bandbreite. Diese Datenkommunikation erfolgt über das Internet nach dem IP (Internet Protokoll)-Verfahren. Dabei werden Datenpakete über paketorientierte Verbindungen, das heisst verbindungslos, zwischen den Teilnehmern übermittelt. Bei der paketorientierten Vermittlung wird der Verbindungskanal zwischen den Teilnehmern nur für die Übermittlung des jeweiligen Datenpakets frei gewählt. Ein nachfolgendes Datenpaket kann über einen anderen Kanal geleitet werden. Daher ist es möglich, dass die Empfangsreihenfolge der Datenpakete sich von der Sendereihenfolge unterscheidet.

Zunehmend wird gefordert, große Datenmengen auch durch mobile Kommunikation mit hoher Bandbreite übertragen zu können. Es wurde daher ein IP-basiertes Funkkommunikationsnetz vorgeschlagen(siehe zum Beispiel 3GPP, IP Transport in UTRAN Work Task Technical Report, in 3GPP TR 25.933 2001), in dem die Verbindungen nach dem IP-Verfahren erfolgen.

Der Erfindung liegt das Problem zugrunde, ein Funkkommunikationssystem sowie ein Verfahren zu dessen Betrieb anzugeben, das einerseits mit Funkkommunikationssystemen, die verbindungsorientierte Verbindungen unterstützen, kompatibel ist, und das andererseits die mobile Datenkommunikation mittels verbindungsloser Kommunikation unterstützt.

Dieses Problem wird erfindungsgemäß gelöst durch ein Funkkommunikationssystem gemäß Anspruch 1, sowie ein Verfahren zu dessen Betrieb gemäß Anspruch 7. Weitere Ausgestaltungen der Erfindung gehen aus den Unteransprüchen hervor.

Das Funkkommunikationssystem umfasst ein erstes Netzwerkelement, das verbindungsorientierte Verbindungen unterstützt, und ein zweites Netzwerkelement, das paketorientierte Verbindungen unterstützt. Über eine Netzübergangseinheit sind das erste Netzwerkelement und das zweite Netzwerkelement miteinander verbunden. Zur Übertragung von Daten zwischen dem ersten Netzwerkelement und dem zweiten Netzwerkelement wird eine verbindungsorientierte Verbindung zwischen dem ersten Netzwerkelement und der Netzübergangseinheit aufgebaut und eine paketorientierte Verbindung zwischen dem zweiten Netzwerkelement und der Netzübergangseinheit. Dabei wird ein erstes Verbindungsprotokoll, das zwischen dem ersten Netzwerkelement und der Netzübergangseinheit zum Einsatz kommt, und ein zweites Verbindungsprotokoll, das zwischen dem zweiten Netzwerkelement und der Netzübergangseinheit zum Einsatz kommt, verwendet. Das erste Verbindungsprotokoll und das zweite Verbindungsprotokoll unterscheiden sich durch ein Informationselement zur Ansteuerung der Netzübergangseinheit, das eine Adresse für die paketorientierte Verbindung zwischen dem zweiten Netzwerkelement und der Netzübergangseinheit enthält. Auf diese Weise werden die unterschiedlichen Erfordernisse, die einerseits die verbindungsorientierte Verbindung und andererseits die paketorientierte Verbindung stellen, aneinander angepasst. Die Netzübergangseinheit stellt bei der Datenübertragung einen Zwischenknoten dar, von dem und zu dem die einzelnen Teilverbindungen aufgebaut werden.

Das erste Netzwerkelement kann dabei sowohl ein erstes Zugangsnetz, als auch ein Stammnetzwerk des Funkkommunikationssystems sein, das verbindungsorientierte Verbindungen unterstützt. Das zweite Netzwerkelement kann sowohl ein zweites Zugangsnetz sein, das paketorientierte Verbindungen unterstützt, als auch, falls das erste Netzwerkelement das erste Zugangsnetz ist, ein Stammnetzwerk, das paketorientierte Verbindungen unterstützt.

Darüberhinaus kann in einem Funkkommunikationssystem mit nur einem Zugangsnetz und einem Stammnetzwerk das erste Netzwerkelement das Zugangsnetz sein, das paketorientierte Verbindungen unterstützt, und das zweite Netzwerkelement das Stammnetzwerk, das verbindungsorientierte Verbindungen unterstützt. Alternativ kann das Zugangsnetz verbindungsorientierte Verbindungen und das Stammnetzwerk paketorientierte Verbindungen unterstützen.

Vorzugsweise umfasst das erste Verbindungsprotokoll Informationselemente für den Aufbau der verbindungsorientierten Verbindung zwischen dem ersten Netzwerkelement und der Netzübergangseinheit. Das zweite Verbindungsprotokoll umfasst die Informationselemente des ersten Verbindungsprotokolls und das Informationselement zur Ansteuerung der Netzübergangseinheit. Das Informationselement zur Ansteuerung der Netzübergangseinheit enthält eine Adresse des zweiten Netzwerkelementes, zu der die paketorientierte Verbindung mit der Netzübergangseinheit aufgebaut wird. Darüberhinaus kann das zweite Verbindungsprotokoll weitere Informationselemente enthalten.

Die Verbindung lässt sich für den Fall vorteilhaft realisieren, dass das erste Netzwerkelement ATM-Verbindungen unterstützt und das zweite Netzwerkelement IP-Verbindungen unterstützt. In diesem Fall werden zum Beispiel in der im UMTS-Modell definierten Radio Network Layer beim Aufbau einer Verbindung Signalisierungen ausgetauscht, die die Informationen, die für den Aufbau der ATM-Verbindung zwischen dem ersten Netzwerkelement und der Netzübergangseinheit benötigt werden, enthalten. Zu diesen Informationen gehört zum Beispiel die Transport Layer Address (TLA) und Transport Association (TA).In dem Transport Network Layer werden dann das erste Verbindungsprotokoll und das zweite Verbindungprotokoll ausgetauscht.

Die Verbindung zwischen dem ersten Netzwerkelement und der Netzübergangseinheit wird vorzugsweise als AAL2-Verbindung aufgebaut. Das Informationselement zur Ansteuerung der Netzübergangseinheit, das im zweiten Verbindungsprotokoll enthalten ist, enthält eine IP-Endpunktkennung des zweiten Netzwerkelementes.

Vorzugsweise weist das erste Verbindungsprotokoll, mit dessen Hilfe die Verbindung zwischen dem ersten Netzwerkelement und der Netzübergangseinheit aufgebaut wird, die Informationselemente entsprechend einem ALCAP-Protokoll . Das zweite Verbindungsprotokoll enthält zusätzlich eine IP-Adresse und einen UDP-Port, zu denen die paketorientierte Verbindung aufgebaut wird.

Im Folgenden wird die Erfindung anhand eines Beispiels, das in den Figuren dargestellt ist, näher erläutert.

Figur 1 zeigt ein erfindungsgemäßes Funkkommunikationssystem.

Figur 2 zeigt Verbindungsaufbau, Datenübertragung und Verbindungsabbau zwischen einem IP-basierten und einem ATM-basierten Zugangsnetz.

Figur 3 zeigt die beim Verbindungsaufbau zwischen dem IP-basierten und ATM-basierten Zugangsnetz verwendeten Protokolle.

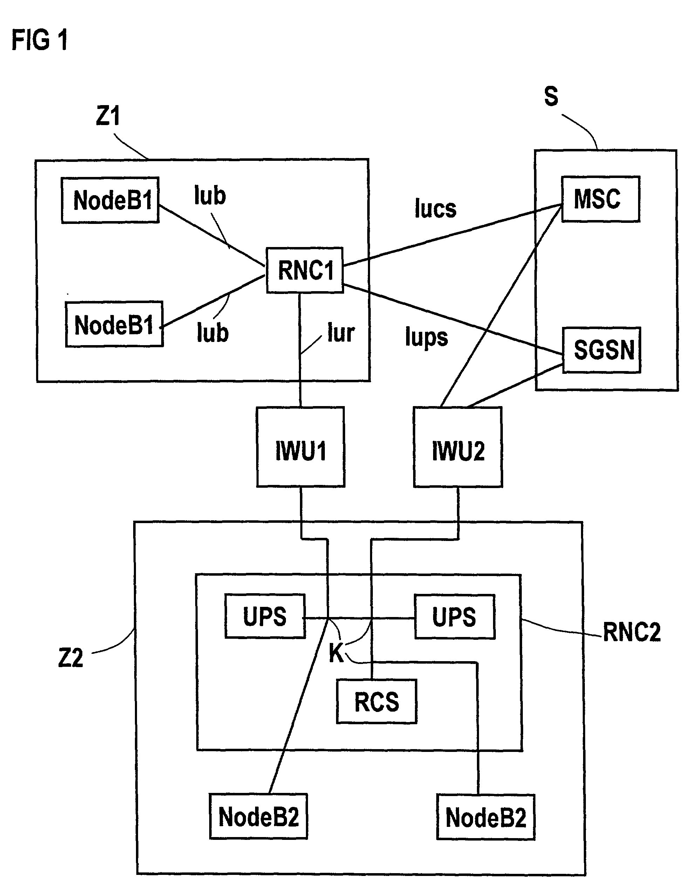

Ein Funkkommunikationssystem (siehe Figur 1) umfasst ein erstes Zugangsnetzwerk Z1, ein zweites Zugangsnetzwerk Z2 und ein Stammnetzwerk S. Das erste Zugangsnetz Z1 umfasst Basisstationen NodeB1, die über eine Iub-Schnittstelle mit einer Funknetzsteuerung RNC1 verbunden sind. Das erste Zugangsnetz Z1 unterstützt ATM-basierte Verbindungen.

Das zweite Zugangsnetz Z2 umfasst mehrere Basisstationen NodeB2. Die Basisstationen NodeB2 sind mit einer Funknetzsteuerung RNC2 verbunden. Die Funknetznetzsteuerung RNC2 umfasst eine oder mehrere Userplaneserver UPS und einen oder mehrere Radiocontrolserver RCS, die über Knoten K miteinander verbunden sind. Die Radiocontrolserver RCS übernehmen die Steuerung und Überwachung der Luftschnittstelle, sowie von deren Funkressourcen, während die Userplaneserver UPS die Übermittlung der Nutzdaten übernimmt. Eine derartige Aufteilung der Nutzdaten und der Signalisierungsdaten wurde zum Beispiel in der deutschen Patentanmeldung P 100 46 342.8-31 vorgeschlagen. Das zweite Zugangsnetzwerk Z2 unterstützt IP-basierte Verbindungen.

Über eine Schnittstelle Iur ist die Funknetzsteuerung RNC1 mit einer ersten Netzübergangseinheit IWU1 verbunden. Die erste Netzübergangseinheit IWU1 ist andererseits mit dem zweiten Zugangsnetz Z2 verbunden. Die Verbindung ist zum Beispiel über einen Knoten K der Funknetzsteuerung RNC2 realisiert.

Über eine Schnittstelle Iucs ist die Funksteuerung RNC1 darüber hinaus mit einer Mobilvermittlungsstelle MSC des Stammnetzwerkes und über eine Schnittstelle Iups für paketvermittelte Daten mit einem Paketdatenknoten SGSN des Stammnetzwerkes S verbunden. Das Stammnetzwerk S unterstützt ATM-basierte Verbindungen.

Über eine zweite Netzübergangseinheit IWU2 ist die Funknetzsteuerung RNC2 des zweiten Zugangsnetzes Z2 mit dem Stammnetzwerk S verbunden.

Zum Aufbau einer Datenverbindung zwischen dem ersten Zugangsnetz Z1 und dem zweiten Zugangsnetz Z2 beziehungsweise zwischen dem zweiten Zugangsnetz Z2 und dem Stammnetzwerk S wird jeweils eine IP-basierte Verbindung zwischen dem zweiten Zugangsnetz Z2 und der Netzübergangseinheit IWU1 beziehungsweise IWU2 aufgebaut und eine weitere, ATM-basierte Verbindung zwischen der Netzübergangseinheit IWU1 und dem ersten Zugangsnetz Z1 beziehungsweise der Netzübergangseinheit IWU2 und dem Stammnetzwerk S.

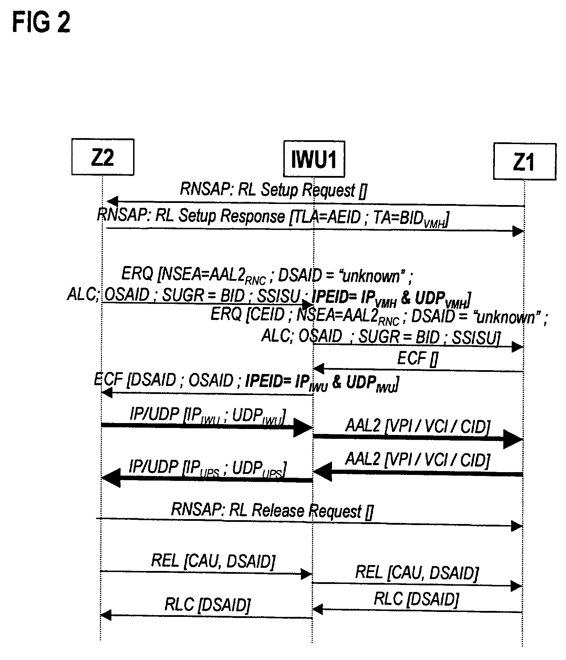

Zum Aufbau einer Verbindung zwischen dem ersten Zugangsnetz Z1 und dem zweiten Zugangsnetz Z2 wird für die Netzübergangseinheit IWU1 transparent eine Verbindungsaufforderung RL Setup Request von der Funknetzsteuerung RNC1 des ersten Zugangsnetzes Z1 an die Funknetzsteuerung RNC2 des zweiten Zugangsnetzes Z2 verwendet (s. Fig.2). Es folgt eine Antwort RL Setup Response [TLA=AEID;TA=BID_{VMH}]. Mit dieser Antwort werden die Verbindungsparameter TLA und TA übermittelt.

Anschließend wird über die Transportnetzsteuerung die Verbindung aufgebaut. Dazu wird von der Funknetzsteuerung RNC2 des zweiten Zugangsnetzes Z2 eine Establishment Request ERQ[NSEA=AAL2_{RNC};DSAID="unknown";ALC;OSAID;SUGR=BID;SSISU; IPEID=IP_{VMH} & UDP_{VMH}] an die Netzübergangseinheit IWU1 geschickt. Diese Signalisierungsnachricht enthält die Argumente NSEA für Destination NSAP service endpoint address, DSAID für Destination signalling association identifier, ALC für Link characteristics, OSAID für Originating signalling association identifier, SUGR für Served user generated reference, SSISU für Service specific information (SAR-unassured) sowie IPEID, das eine Adresse der Funknetzsteuerung RNC2 enthält, zu der eine Verbindung von der Netzübergangseinheit IWU1 zu der Funknetzsteuerung RNC2 aufgebaut werden soll. Dabei steht NSAP für Network Service Access Point und SAR für Segmentation and Reassembly (Sublayer).

Zwischen der Netzübergangseinheit IWU1 und dem ersten Zugangsnetz Z1 wird eine Signalisierungsnachricht Establishment Request ERQ[CEID;NSIA=AAL2_{RNC};DSAID="unknown";ALC;OSAID; SUGR=BID;SSISU] abgeschickt. Dabei steht der Parameter CEID für Connection Element Identifier. Die übrigen Parameter sind der Signalisierungsnachricht zwischen dem zweiten Zugangsnetz Z2 und der Netzübergangseinheit IWU1 entnommen.

Das erste Zugangsnetz Z1 antwortet der Netzübergangseinheit mit einem Establishment Confirm ECF. Die Netzübergangseinheit antwortet dem zweiten Zugangsnetz Z2 mit einem Establishment Confirm [DSAID;OSAID;IPEID=IP_{IWU} und UDP_{IWU}]. In dieser Signalisierungsnachricht wird dem zweiten Zugangsnetz Z2 eine Adresse der Netzübergangseinheit IWU1 mitgeteilt, zu der die Verbindung aufgebaut werden soll.

Damit steht die Verbindung von dem zweiten Zugangsnetz Z2 zu der Netzübergangseinheit IWU1 und von der Netzübergangseinheit IWU1 zu dem ersten Zugangsnetz Z1 und umgekehrt. Es werden Nutzdaten übertragen, die als schwarze Pfeile dargestellt sind. Die Nutzdaten werden zwischen dem zweiten Zugangsnetz Z2 und der Netzübergangseinheit IWU1 über eine IP/UDP-Verbindung übertragen. Zwischen der Netzübergangseinheit IWU1 und dem ersten Zugangsnetz Z1 werden die Nutzdaten über eine ATM-basierte AAL2-Verbindung übertragen.

Nach Ende der Datenübertragung wird die Verbindung wieder abgebaut. Dazu wird zwischen dem Zugangsnetz Z2 und dem ersten Zugangsnetz Z1 ein RL Release Request für die Netzübergangseinheit transparent ausgetauscht. Es folgt der Abbau der Verbindung zwischen dem zweiten Zugangsnetz und der Netzübergangseinheit IWU1, sowie zwischen der Netzübergangseinheit IWU1 und dem ersten Zugangsnetz Z1.

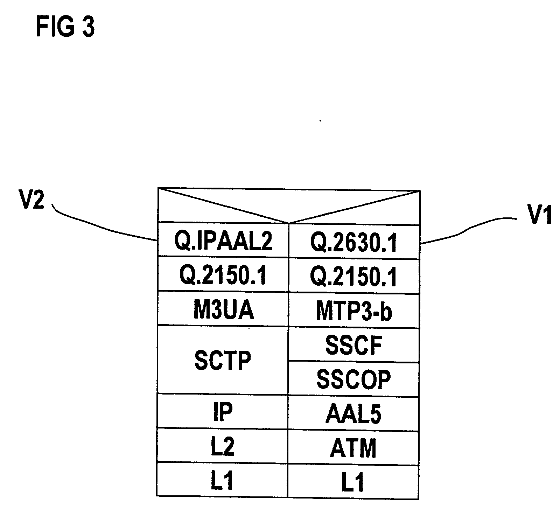

In Figur 3 sind die dabei verwendeten Protokolle dargestellt. In der obersten Schicht wird für das erste Zugangsnetz ein erstes Verbindungsprotokoll V1 und für das zweite Zugangsnetz ein zweites Verbindungsprotokoll V2 verwendet. Das erste Verbindungsprotokoll V1 ist das unter der Bezeichnung Q.2630.1 oder ALCAP standardisierte Protokoll zum Aufbau von ATM-basierten Verbindungen. Das zweite Verbindungsprotokoll V2 enthält die im ersten Verbindungsprotokoll V1 aufgeführten Informationselemente und enthält darüber hinaus eine IP-Endpunktkennung, die den Aufbau der IP-Verbindung zwischen dem zweiten Zugangsnetz Z2 und der Netzübergangseinheit IWU ermöglicht.

Der Aufbau einer Verbindung zwischen dem zweiten Zugangsnetz Z2 und dem Stammnetz S über die zweite Netzübergangseinheit IWU2 erfolgt analog.

## Patentansprüche

1. Funkkommunikationssystem mit einer Netzübergangseinheit, die ein erstes Netzwerkelement, das verbindungsorientierte Verbindungen unterstützt, und ein zweites Netzwerkselement, das paketorientierte Verbindungen unterstützt, miteinander verbindet,
- wobei auf Grund eines ersten Verbindungsprotokolls, das dem ersten Netzwerkelement zugeordnet ist, eine verbindungsorientierte Verbindung zwischen dem ersten Netzwerkelement und der Netzübergangseinheit aufgebaut wird, und auf Grund eines zweiten Verbindungsprotokolls, das dem zweiten Netzwerkelement zugeordnet ist, eine paketorientierte Verbindung zwischen dem zweiten Netzwerkelement und der Netzübergangseinheit aufgebaut wird, und wobei sich das erste Verbindungsprotokoll und das zweite Verbindungsprotokoll durch ein Informationselement zur Ansteuerung der Netzübergangseinheit unterscheiden, dass eine Adresse für die paketorientierte Verbindung zwischen dem zweiten Netzwerkelement und der Netzübergangseinheit enthält.

2. Funkkommunikationssystem nach Anspruch 1,
- bei dem das Funkkommunikationssystem ein Stammnetzwerk, ein erstes Zugangsnetz und ein zweites Zugangsnetz umfasst,
- bei dem das erste Netzwerkelement das erste Zugangsnetz des Funkkommunikationssystems und das zweite Netzwerkelement das zweite Zugangsnetz oder das Stammnetzwerk des Funkkommunikationssystems ist, oder
- bei dem das erste Netzwerkelement das Stammnetzwerk des Funkkommunikationssystems und das zweite Netzwerkelement das zweite Zugangsnetz des Funkkommunikationssystems ist.

3. Funkkommunikationssystem nach Anspruch 1 oder 2,
- bei dem das erste Verbindungsprotokoll Informationselemente für den Aufbau der verbindungsorientierten Verbindung zwischen dem ersten Netzwerkelement und der Netzübergangseinheit umfasst,
- bei dem das zweite Verbindungsprotokoll die Informationselemente des ersten Verbindungsprotokolls und das Informationselement zur Ansteuerung der Netzübergangseinheit enthält,
- bei dem das Informationselement zur Ansteuerung der Netzübergangseinheit eine Adresse des zweiten Netzwerkelementes enthält, zu der die paketorientierte Verbindung mit der Netzüberganseinheit aufgebaut wird.

4. Funkkommunikationssystem nach einem der Ansprüche 1 bis 3,
- bei dem das erste Netzwerkelement ATM-Verbindungen unterstützt und
- bei dem das zweite Netzwerkelement IP-Verbindungen unterstützt.

5. Funkkommunikationssystem nach Anspruch 4,
- bei dem die Verbindung zwischen dem ersten Netzwerkelement und der Netzübergangseinheit als AAL2-Verbindung aufgebaut wird,
- bei dem das Informationselement zur Ansteuerung der Netzübergangseinheit eine IP-Endpunkt-Kennung des zweiten Netzwerkelementes enthält.

6. Funkkommunikationssystem nach Anspruch 5,
- bei dem das erste Verbindungsprotokoll, mit dessen Hilfe die Verbindung zwischen dem ersten Netzwerkelement und der Netzübergangseinheit aufgebaut wird, die Informationselemente entsprechend einem ALCAP-Protokoll aufweist,
- bei dem das zweite Verbindungsprotokoll zusätzlich eine IP-Adresse und einen UDP-Port, zu denen die paketorientierte Verbindung aufgebaut wird, enthält.

7. Verfahren zum Betrieb eines Funkkommunikationssystems, bei dem eine Verbindung zwischen einem ersten Netzwerkelement, das verbindungsorientierte Verbindungen unterstützt, und einem zweiten Netzwerkelement, das paketorientierte Verbindungen unterstützt, dadurch aufgebaut wird, dass eine verbindungsorientierte Verbindung zwischen dem ersten Netzwerkelement und einer Netzübergangseinheit und eine paketorientierte Verbindung zwischen dem zweiten Netzwerkelement und der Netzübergangseinheit aufgebaut werden, wobei zum Verbindungsaufbau ein erstes Verbindungsprotokoll, das dem ersten Netzwerkelement zugeordnet ist, und ein zweites Verbindungsprotokoll, das dem zweiten Netzwerkelement zugeordnet ist, verwendet werden, wobei sich das erste Verbindungsprotokoll und das zweite Verbindungsprotokoll durch ein Informationselement unterscheiden, das eine Adresse zur Ansteuerung der Netzübergangseinheit für die paketorientierte Verbindung zwischen dem zweiten Netzwerkelement und der Netzübergangseinheit enthält.

8. Verfahren nach Anspruch 7,
- bei dem das Funkkommunikationssystem ein Stammnetzwerk, ein erstes Zugangsnetz und ein zweites Zugangsnetz umfasst,
- bei dem das erste Netzwerkelement das erste Zugangsnetz und das zweite Netzwerkelement das zweite Zugangsnetz oder das Stammnetzwerk sind oder
- bei dem das erste Netzwerkelement das Stammnetzwerk und das zweite Netzwerkelement das zweite Zugangsnetz ist.

9. Verfahren nach Anspruch 7 oder 8,
- bei dem das erste Verbindungsprotokoll Informationselemente für den Aufbau der verbindungsorientierten Verbindung zwischen dem ersten Netzwerkelement und der Netzübergangseinheit umfasst,
- bei dem das zweite Verbindungsprotokoll die Informationselemente des ersten Verbindungsprotokolls und das Informationselement zur Ansteuerung der Netzübergangseinheit enthält,
- bei dem das Informationselement zur Ansteuerung der Netzübergangseinheit eine Adresse des zweiten Netzwerkelementes enthält, zu der die paketorientierte Verbindung mit der Netzübergangseinheit aufgebaut wird.

10. Verfahren nach einem der Ansprüche 7 bis 9,
- bei dem das erste Netzwerkelement ATM-Verbindungen unterstützt und
- bei dem das zweite Netzwerkelement IP-Verbindungen unterstützt.

11. Verfahren nach Anspruch 10,
- bei dem die Verbindung zwischen dem ersten Netzwerkelement und der Netzübergangseinheit als AAL2-Verbindung aufgebaut wird,
- bei dem das Informationselement zur Ansteuerung der Netzübergangseinheit eine EP-Endpunkt-Kennung des zweiten Netzwerkelementes enthält.

12. Verfahren nach Anspruch 11,
- bei dem das erste Verbindungsprotokoll, mit dessen Hilfe die Verbindung zwischen dem ersten Netzwerkelement und der Netzübergangseinheit aufgebaut wird, die Informationselemente entsprechend einem AlCAP-Protokoll aufweist,
- bei dem das zweite Verbindungsprotokoll zusätzlich eine IP-Adresse und einem UDP-Port, zu denen die paketorientierte Verbindung aufgebaut wird, enthält.
